# EUROPEAN PATENT SPECIFICATION

(11) **EP 2 279 383 B1**
(45) Date of publication and mention of the grant of the patent: **28.08.2013**
(21) Application number: 09719750.3
(22) Date of filing: 09.03.2009
(51) Int. Cl.: F24J 2/52, H01L 31/048, F16B 5/00, E04D 3/08, E04B 2/96

(54) **COVERING SLAT WITH FASTENING BAR**
ABDECKLEISTE MIT BEFESTIGUNGSRIEGEL
LATTE DE COUVERTURE AVEC BARRE DE FIXATION

(30) Priority: 10.03.2008 PL 38465908
(43) Date of publication of application: 02.02.2011
(73) Proprietor: Fakro PP Spolka Z O.O., 33-300 Nowy Sacz (PL)
(72) Inventor: MAJOCH, Waclaw, PL-33-300 Nowy Sacz (PL); STOKLOSA, Lukasz, PL-34-642 Dobra (PL)
(86) International application number: PCT/PL2009/050003
(87) International publication number: WO 2009/113889

(56) References cited:
- EP-A- 1 972 748
- WO-A-99/58782
- WO-A-02/084042
- WO-A-2006/086185
- AU-B2- 621 633

## Description

The subject matter of the invention is a covering slat with its fastening, intended for covering gaps between neighbouring equipment segments and adapted to be secured in these gaps with threaded fasteners with cross-bars grappling the bottom surface of structural components forming the gap between the neighbouring segments. The slat by the invention is applied in particular at assembly of solar collectors located in a dedicated pit in a roof slope.

The solution called "Masking slat" is known from the specification of Polish utility model No Ru-58372. In this case the slat being a profile of a cross-section similar to a T-bar has triangular catches on its web. After the web of this slat is pushed into the gap that the slat covers, the catches hold the slat in its operating position with friction forces. However, this solution requires a great dimensional accuracy of the width of the gap in which the slat catches are placed. Fastenings of bolts in T-slots, where the width of the bolt head allows the bolt head to be inserted in the T-slot and after turning the bolt by a small angle the bolt head enters the wider part of the T-slot and blocks there thus allowing to use the bolt for fastening, are also known. A solution like this is useful in the cases of fastening on two or three bolts. However, if long covering slats are fastened, this solution is difficult to assembly due to the need to individually set up many threaded fasteners in order to insert them into the gap covered.

WO99/58782 discloses a panel assembly with panels mounted to a respective edge of the pening or in frames, secured along at least one edge to the respective edge of the opening by a plurality of retaining members. The retaining members are snap-fitted to a respective support member through a gap between the adjacent edges of the panels so that the tetaining member exerts pressure on the edges of the panels. The retaining member has a longitudinally extending tongue for insertion between the jaws of the support member. The tongue has in cross-section an enlarged arrowshaped head. To fix the retaining member to the support, the head is inserted between the jaws and the retaining member pushed towards the support. This initially caused the head to resiliently force the jaws apart. To allow the head to pass between the wedges. Upon further insertion, the jaws close, by relaxation of the resilient deforamtion, such that the wedge snap-engage behind the head and lock the retaining member to support. The snap connection is therefore provided to fasten finally the covering element in a gap.

The solution accoding to the invention relates to a covering slat with fasteners, for covering gap between two neighbouring segments of equipment, in particular solar collectors, adapted to mount in this gap and for grappling the eqipment segments. Said covering slat comprising a profile with covering flange comprising through holes placed in the flange and located along the length of the profile for threaded fasteners, said fasteners having cross-bars.

The essence of the solution by the invention is that the each cross-bars is releasably connected to the profile by a clasp lock for holding this cross-bar in a position along the profile during mounting of the covering slat into the gap covered, said gap between neighouring eqipment segments, in particular solar collectors. In their side walls, next to their faces, the segments have shoulders facing the neighbouring segment, and the gap covered by the covering slat is formed between these shoulders. At a short distance away from the face of these segments, their sidewalls are retracted, forming a clear area between the neighbouring segments, which is wider than the gap between the shoulders. In the half of its length each cross-bar has a threaded hole operating with a threaded fastener, advantageously a screw, one of the many fasteners fastening the covering slat, whereas the profile in its covering flange has through holes for threaded fasteners operating with the cross-bars.

After the cross-bars are inserted into the gap between the neighbouring equipment segments and after they are released from the clasp locks, the cross-bars are inserted into a room wider than the gap, where after the threaded fastener together with the cross-bar is turned by less than 90°, the cross-bar rests against the walls of neighbouring equipment segments, because its length exceeds the width of the room it is inserted in and this resting blocks the possibility of further turn of the cross-bar. Next, as a result of screwing the threaded fastener in the cross-bar, the cross-bar shifts towards the shoulder and then it rests against its surface parallel to the face of the segment, pulling the covering slat to the face of both neighbouring segments.

In the first variant of the invention the profile of the covering slat has a single web, connected basically perpendicularly to the covering flange. This web, on a segment adjacent to the covering flange is shifted relative to the plane crossing the geometrical axis of the holes in the covering flange, consequently this part of the web passes by the threaded fasteners. The web segment remote from the covering flange is bent towards the plane crossing the hole axis, and then it is bent into a segment perpendicular to the covering flange, located in the geometrical axis of the holes of the flange, and at the same time in the axis of the threaded fasteners. This web segment is ended with a boss, which by operating with the cross-bar forms a clasp lock. Near the holes in the covering flange for threaded fasteners providing fastening of the covering slat, the web has gaps at a length a bit longer than the thread diameter of the threaded fasteners. The gaps are only in the web part located in the geometrical axis of the holes and the threaded fasteners, and in the bend adjacent to this part, so they do not weaken the web on the segment adjacent to the covering flange, stiffening the profile.

The cross-bar has catches facing each other with their cogs, at the same time the gap between the catch cogs is narrower than the boss at the end of the web and wider than the web thickness in the direct vicinity of this boss. This makes the cross-bar placed alongside the covering slat clasp locked to the web, resting with its catches against the boss at the web end. After inserting the cross-bar into the gap and pressing on the threaded fastener operating with the cross-bar in the direction of the fastener's axis, the catches of the cross-bar bend out within their elasticity and the cross-bar releases itself from the clasp lock with the boss at the end of the web in the covering slat profile.

Advantageously the cross-bar is a segment of a closed channel section, with a thickened web, in which a threaded hole is located. The ends of flanges of this channel, bent towards each other and shaped in the form of catches, form a gap operating with the web boss in the covering slat profile.

In the second variant of the invention the web is in its entirety located in the geometrical axis of the holes in the covering flange, and at the same time in the axis of the threaded fasteners. Near the holes for the threaded fasteners in the covering flange the web is split into two walls taking over the stiffening role of the web. Between these walls of the split web there is a clear area, being an extension of the hole in the covering flange. Advantageously, splitting the web into two walls involves only a part of its height, in the vicinity of the covering flange, leaving a room for cross-bars placed alongside the web. The cross-bars and threaded fasteners are identical as in the first variant of the invention and the web on the segment operating with the cross-bar has gaps at a length a bit longer than the diameter of the thread of the threaded fasteners and at a height projecting outside the boss.

In the third variant of the invention, as in the second one, the web is in its entirety located in the geometrical axis of the holes in the covering flange, and at the same time in the axis of the threaded fasteners. Near the holes for threaded fasteners in the covering flange, the web has gaps at a length a bit longer than the thread diameter of these fasteners, involving the whole height of the web. Weakening of the web by the gaps occurring in the web is made up for by a larger thickness of the covering flange. The cross-bars and threaded fasteners are identical as in the two previous variants of the invention.

In the fourth variant of the invention the profile has two webs basically perpendicular to the covering flange, passing by the threaded fasteners at both sides of the fasteners. The webs have catches with cogs facing outwards at their ends. The cross-bar has a structure similar as in the three previous variants of the invention with the catches facing each other with their cogs and only the distance between the tips of these catches is longer than in the previous variants. This distance is longer than the distance between the external surfaces of both webs above the catches in their direct vicinity and shorter than the distance between the tips of the cogs in the catches of both webs.

In the position ready for assembling the covering slat in the gap, the cross-bar placed alongside the covering slat is clasp locked to both webs, resting with its catches against the catches at the ends of these webs. After the cross-bar is inserted into the gap and pressed on the threaded fastener operating with the cross-bar in the direction of the fastener axis, the catches of the cross-bar bend out within their elasticity, and the catches of the webs bend in, and the cross-bar releases itself from the clasp lock with the webs in the covering slat profile.

In the fifth variant of the invention the profile has two webs basically perpendicular to the covering flange, passing by the threaded fasteners, at both sides of the fasteners. The webs have catches with cogs facing each other, or inwards. The gap between the catch cogs is narrower than the cross-bar width, and wider than the thread diameter of the threaded fasteners. The cross-bar has a cuboid shape, advantageously with grooves in two opposite longer walls, for operating with the catches of webs in the covering slat profile. The cross-bar may also have no grooves and then the catches of the webs in the covering slat profile catch the cross-bar edges which are the most remote from the covering flange of the profile. In the position ready for assembling the covering slat in the gap, the cross-bar is located alongside the covering slat between the both webs, and is clasp locked to the catches of these webs. After the cross-bar is inserted into the gap and pressed on the threaded fastener operating with the cross-bar in the direction of the fastener axis, the web ends bend out within their elasticity, and the cross-bar releases itself from the clasp lock.

In all variants of the invention the covering slat may be equipped with seals located alongside the edge of the covering flange of its profile.

The use of the invention, in particular in the case of long covering slats, has an advantageous effect of facilitating of inserting a large number of slat cross-bars into the gap covered, thanks to holding these cross-bars alongside the covering slat with a clasp lock, which facilitates and expedites its assembly. The use of the invention is also advantageous during transportation of the covering slats as holding the cross-bars alongside the profile allows to obtain a compact transportation unit.

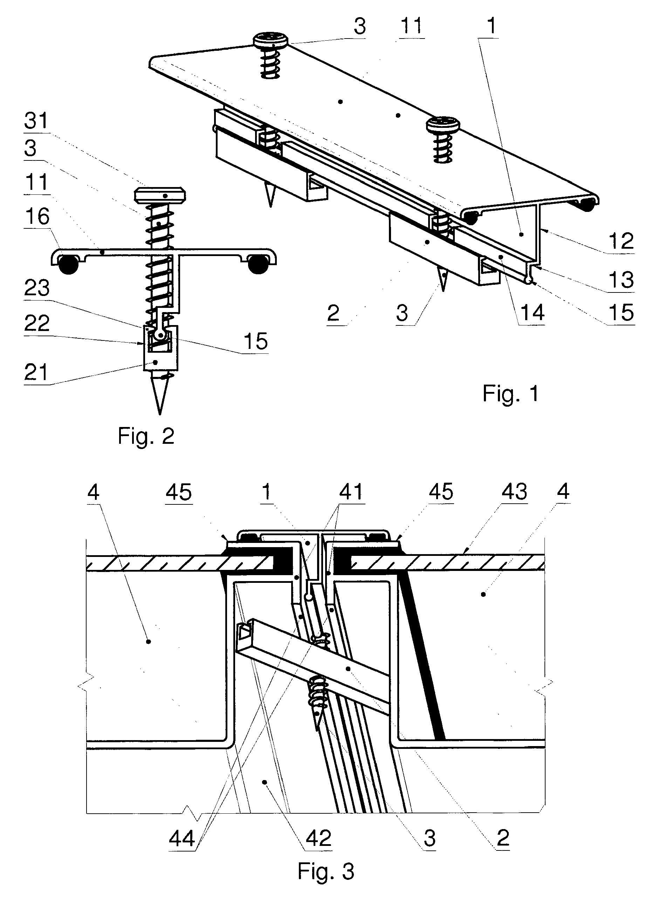

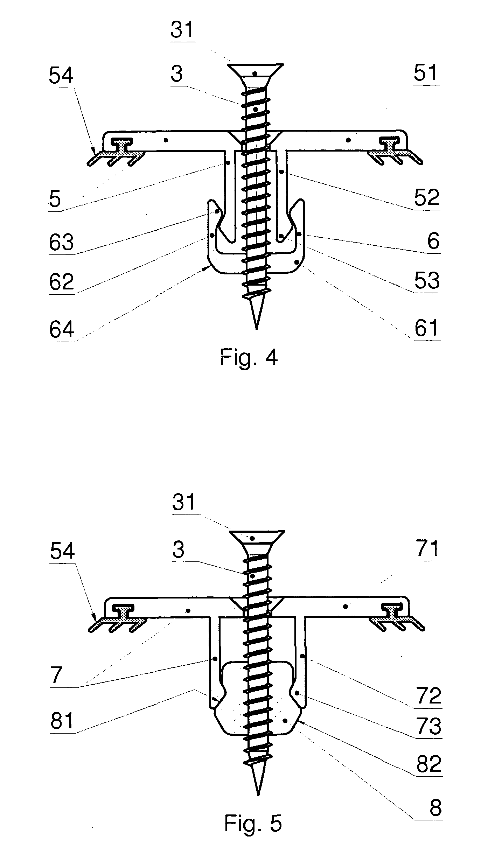

Embodiment Examples. The subject matter of the invention is shown in the embodiment examples in the drawing, where the individual figures present: Fig. 1 - a segment of the covering slat with a single web, with threaded fasteners and cross-bars connected to the web, in an axonometric view; Fig. 2 - the covering slat shown in Fig. 1 viewed from the front; Fig. 3 - fastening of the covering slat shown in Fig. 1 in the gap in an axonometric view from the bottom Fig. 4 - the cross-section of the covering slat with two webs equipped with catches facing outside; Fig. 5 - the cross-section of the covering slat with two webs equipped with catches facing inside

Example 1. The covering slat with its fastening, according to the first embodiment example of the invention (fig. 1-3), comprises a profile 1 and cross-bars 2 placed at the length of the slat and threaded fasteners, specifically screws 3, for fastening of the slat. The drawing presents a segment of the covering slat with only two crossbars, in fact the covering slats are longer and the number of slats is corresponding to their length. The profile has a covering flange 11 and a perpendicular web 12, which on a segment adjacent to the covering flange is shifted relative to the plane crossing the geometrical axis of the holes in the covering flange and the axes of the screws 3, as a result the web passes by these screws. The part of the web 12 opposite to the covering flange 11 bends into a short transverse segment 13, parallel to the covering flange and then bends into an end segment 14, perpendicular to the covering flange, positioned in the geometrical axis of the screws 3 and the screw holes in the covering flange of the profile.

The end segment 14 of the web is ended with a boss 15 operating with the crossbars 2 during assembly of the covering slat into the gap. The web 12 is uniform on its segment adjacent to the covering flange 11, whereas: on the transverse segment 13 and the end segment 14, it has gaps for screws 3 fastening the covering slat in the gap. The covering flange 11 of the covering slat profile, on its side adjacent to the edges of two neighbouring segments of solar collectors 4, has seals 16 placed in grooves located along the edge of the covering flange.

The cross-bar 2 is a short segment of a channel section with a thickened web 21, in which a threaded hole for the screw 3 is located at the half length of the crossbar. The flanges 22 of this channel are bent with their ends towards each other, having a form of catches 23, with a gap between them narrower than the boss 15 at the end of the web of the profile 1, and wider than the web thickness, in direct vicinity of the shoulder. The catches 23 together with the boss 15 at the end of the profile web form a clasp lock holding the cross-bar 2 along the web of the profile 1, while it is being inserted into the gap covered by the slat.

The web 12 of the covering slat profile together with the cross-bars 2 located alongside the profile for the time of assembly, are inserted into the gap between the solar collectors 4. The gap is formed between the shoulders 41 of the collector sidewalls 42, located at the collector face 43, these shoulders are facing towards the analogous shoulder of the neighbouring collector. A bit further away from the face 43, the solar collector sidewalls 42 are retracted, forming between the neighbouring collectors a clear area wider than the gap between the shoulders.

When the cross-bars 2 of the covering slat are mounted with their catches 23 on the boss 15 of the web in the profile 1 of the covering slat, the heads 31 of the screws 3 are located above the surface of the covering flange 11 of this profile. Pressing the screw head 31 with a screwdriving machine causes an axial pressure of the screw 3 onto the cross-bar 2, of which flanges 22 bend elastically out, consequently the cross-bar releases itself from the clasp lock with the boss 15, and then the cross-bar 2 leaves the gap shifting into the widened area between the walls 42 of the solar collectors and the screw head 31 settles on the covering flange 11 of the profile. Turning the screw 2 initially causes the turn of the crossbar 2, until it rests against the walls 42 of both collectors, which blocks the turn of the cross-bar. Further turning of the screw 3 results in its screwing in the web of the cross-bar 2 and shifting of the cross-bar towards the shoulders 41, until it rests against the bearing surfaces 44 of the shoulders of both solar collectors. The final stage of tightening the screws is pressing the covering slat and its seals 16 to the face 45 in the shoulders 41 of both solar collectors.

Example 2. The covering slat with its fastening, by the second embodiment example (not presented in the drawing) differs from the slat by the first example in that the whole web in the profile is located in the axis of the holes in the flange and thus in the axis of threaded fasteners. Near the holes in the covering flange the web is split into two walls with a clear area in between, being an extension of the hole in the covering flange. The walls of the split web take over its stiffening role and a screw operating with the cross-bar is between these walls. Splitting the web into two walls involves only a part of the height of the web, in the vicinity of the covering flange, whereas the web part remote from the covering flange has on its length gaps slightly larger then the screw diameter, instead of double walls. This part of the web is ended with a boss as in the first embodiment example, forming a clasp lock with cross-bars of the covering slat.

Example 3. The covering slat with its fastening, by the third embodiment example of the invention (not presented in the drawing) differs from the slat by the first example in that the whole web in the profile is located in the axis of the holes in the flange and thus in the axis of threaded fasteners. Near the holes in the covering flange for threaded fasteners, the web has gaps at a length slightly larger then the thread diameter of these fasteners, involving the whole height of the web. The covering flange is thicker than in other embodiment examples to make up for weakening of the web by the gaps. The end of the web opposite to the covering flange forms a boss, as in the two previous embodiment examples, forming a clasp lock with cross-bars of the covering slat.

Example 4. The covering slat with its fastening, by the fourth embodiment example of the invention (fig. 4), comprises a profile 5 and cross-bars 6 placed at the length of the slat and threaded fasteners, specifically screws 3, for fastening of the slat. The profile has a covering flange 51 and two webs 52 perpendicular to the flange, going uniformly, without any gaps, along the whole length of the profile. The webs are located on both sides of the screw 3 and ended with catches 53 facing outwards. The covering flange 51 of the covering slat profile is ended with seals 54.

The cross-bar 6 is a short segment of a channel section with a thickened web 61, as in the cross-bar from the first embodiment example, but has a longer span of flanges 62, which are bent with their ends towards each other, having a form of catches 23. The distance between the tips of catches 63 is longer than the distance between the external surfaces of both webs 52 of the profile 5 above the catches 53 in their direct vicinity, and shorter than the distance between the tips of the catches of both profile webs. The catches 63 of the cross-bar together with the catches 53 of the profile form a clasp lock holding the cross-bar 6 alongside the web of the profile 5, while it is being assembled into the gap covered by the slat. There is a threaded hole for the screw 3 in the web 61, located at the half length of the cross-bar. In addition, the external corners of the joint of the web 61 with flanges 62 of the cross-bar have chamfers 64 facilitating inserting the cross-bar into the gap covered by the covering slats.

When the cross-bars 6 are engaged with their catches 63 to the catches 53 of the profile 5, the heads 31 of the screws 3 are located above the surface of the covering flange 51 of this profile. Pressing the screw head 31 with a screwdriving machine exerts pressure of the screw 3 onto the cross-bar 6, consequently the flanges 62 of the cross-bar bend elastically towards each other, as a result the cross-bar 6 releases itself from the clasp lock with the catches 53 of the webs of the profile 6. The further assembly is identical as in the first embodiment example of the invention: the cross-bar leaves the gap and shifts to the widened area between the walls of the solar collectors, after a small turn it rests against the walls, which blocks its further turn, while causes screwing in of the screw 3 into the web 61 of the cross-bar and pulling the cross-bar to the bearing surface of the shoulders of both neighbouring solar collectors.

Example 5. The covering slat with its fastening, by the fifth embodiment example of the invention (fig. 5), comprises a profile 7 and cross-bars 8 placed at the length of the profile, and threaded fasteners, specifically screws 3, for fastening of the slat. The profile has a covering flange 71 and two webs 72 perpendicular to the flange, going uniformly, without any gaps, across the whole length of the profile. The webs are located at both sides of the screw 3 and ended with catches 73 facing towards each other. The covering flange 71 of the covering slat profile is ended with seals 54, as in the second embodiment example.

The cross-bar 8 has a shape similar to an oblong cuboid, which at its longer sidewalls has grooves 81, their contour corresponding to the contour of the catches 73 of the profile 7. There is a threaded hole for the screw 3 in the cross-bar 8, located at the half of its length. The width of the gap between the cogs of the catches 73 in the profile 7 is smaller than the width of the cross-bar 8, and larger than the thread diameter of the screws 3, which forms a clasp lock holding the cross-bar 8 along the webs 72 of the profile during assembly of the covering slat into the gap covered by the slat. In addition, the part of the cross-bar 8 projecting outside the webs 72 has oblique widenings 82 covering the butting faces of the webs 72, thus facilitating inserting of the covering slat into the gap covered by the slat.

When the cross-bars 8 are held with the catches 73 between the webs 72 of the profile 7, the heads 31 of the screws 3 are located above the surface of the covering flange 71 of this profile. Pressing the screw head 31 with a screwdriving machine exerts pressure of this screw onto the cross-bar 8, consequently the webs 72 bend elastically out, and the cross-bar 8 releases itself from the clasp lock with the catches 73 of the profile. Further assembly is identical as in the first embodiment example of the invention: the cross-bar leaves the gap and shifts to the widened area between the walls of the solar collectors, after a small turn it rests against the walls, which blocks its further turn and causes screwing in of the screw 3 into the cross-bar 6 and pulling the cross-bar to the bearing surface of the shoulders of both neighbouring solar collectors.

## Claims

1. Covering slat with its fastening, for covering gap between two neighbouring segments of equipment (4), in particular of solar collectors, adapted to mount in this gap, and for grappling the equipment segments (4) between which the covering slat is located, said covering slat comprising:
- profile (1, 5, 7) with covering flange (11, 51, 71) comprising through holes placed in the flange and located along the length of the profile 91, 5, 7) for threaded fasteners (3)
- and said threaded fasteneres (3) having cross-bars (2, 6, 8), **characterized in that** each cross-bar (2, 6, 8) is releasably connected to the profile (1, 5, 7) by a clasp lock for holding this cross-bar (2, 6, 8) in a position along the profile (1, 5, 7) during mounting of the covering slat into the gap covered.

2. Slat according to claim 1, **characterized in that** the profile has a web connected generally perpendicularly to the covering flange, ended with a boss, and the cross-bar has catches facing each other with their cogs, in addition the width of the gap between the catch cogs is smaller than the width of the boss at the web end.

3. Slat according to claim 2, **characterized in that** the web (12) of the profile (1) on the segment adjacent to the covering flange (11) is shifted relative to the plane crossing the geometrical axis of the holes in the covering flange, passing by the threaded fasteners (3), and then bends towards the plane crossing the axis of the holes, and next bents into the segment (14) perpendicular to the covering flange (11), located in the geometrical axis of the holes and ended with a boss (15).

4. Slat according to claim 3, **characterized in that** near the holes for threaded fasteners (3) in the covering flange the web has gaps at a length slightly larger than the thread diameter of the threaded fasteners, and the gaps are placed only on the segment (14) of the web located in the geometrical axis of the holes and the adjacent bend (13).

5. Slat according to claim 2, **characterized in that** near the holes for the threaded fasteners in the covering flange, the web is split into two walls with a clear area in between, being an extension of the hole in the covering flange.

6. Slat according to claim 2, **characterized in that** near the holes for threaded fasteners in the covering flange, the web has gaps at a length slightly-larger than the thread diameter of the threaded fasteners, and at the whole height of the web.

7. Slat according to claim 2 or 3 or 4 or 5 or 6, **characterized in that** the cross-bar (2) is a section of a closed channel, with a thickened web (21), in which there is a threaded hole, and the ends of the flanges (22) bent towards each other, shaped in the form of catches (23), form a gap operating with the boss (15) of the web in the profile (1) of the covering slat.

8. Slat according to claim 1 **characterized in that** the profile (5) has two webs basically perpendicular to the covering flange (51), passing by the threaded fasteners (3), with catches (53) with their cogs facing outwards, and the cross-bar (6) has catches (63) with their cogs facing each other, in addition the distance between the tips of the catches (63) of the cross-bar (6) is longer than the distance between the external surfaces of both webs (52), above the catches (53) in their direct vicinity and shorter than the distance between the tips of the cogs in catches (53) of both webs.

9. Slat according to claim 8, **characterized in that** the cross-bar (6) is asection of a channel, with a thickened web (61), in which there is a threaded hole, and the ends of the flanges (62) bent towards each other, shaped in the form of catches (63), form a gap operating with the catches (53) located at the ends of the webs (52) in the profile (5) of the covering slat.

10. Slat according to claim 1, **characterized in that** the profile (7) has two webs (72) basically perpendicular to the covering flange (71), passing by the threaded fasteners (3), with the catches (73) with their cogs facing each other, in addition the width of the gap between the catch (73) cogs is smaller than the width of the cross-bar (8).

11. Slat according to claim 10, **characterized in that** the cross-bar (8) has a shape similar to a cuboid, advantageously with grooves (81) on the two opposite longer walls for operating with the catches (73) of the webs in the profile (7) of the covering slat.

## Patentansprüche

1. Abdeckleiste mit Befestigungsriegel, die zum Abdecken der Spalten zwischen den benachbarten Segmenten der Anlagen **(4),** besonders der Sonnenkollektoren, bestimmt und zum Befestigen in diesen Spalten sowie zum Einhaken der Anlagensegmente **(4)** geeignet ist, zwischen denen die Abdeckleiste angeordnet ist, besteht aus
- dem Profil **(1, 5, 7)** mit Abdeckpaneel **(11, 51, 71),** das Durchgangsbohrungen für die Schraubenverbindungen **(3)** enthält, wobei diese Bohrungen längs des Profils **(1, 5, 7)** verteilt sind,
- den Schraubverbindungen **(3)** mit Brücken zum Einhaken **(2, 6, 8), dadurch gekennzeichnet, dass** jede Brücke **(2, 6, 8)** durch einen Schnappverschluss mit einem Profil **(1, 5, 7)** verbunden ist, das diese Brücke **(2, 6, 8)** in der Position längs des Profilsstückes **(1, 5, 7)** hält, besonders während des Anlegens der Abdeckleiste an den zu bedeckenden Spalt.

2. Die Abdeckleiste gemäß dem Anspruch 1, **dadurch gekennzeichnet, dass** das Profil eine Rippe hat, die grundsätzlich senkrecht zum Abdeckpaneel und mit einer Verdickung am Ende angeschlossen ist, die Brücke dagegen Rasthaken hat, die mit ihrem hervorstehenden Anschlag auf sie selbst gerichtet sind, wobei die Breite des Spalts zwischen den Anschlägen der Rasthaken geringer als die Breite der Verdickung am Ende der Rippe ist.

3. Die Abdeckleiste gemäß dem Anspruch 2, **dadurch gekennzeichnet, dass** die Rippe **(12)** des Profils **(1)** auf dem mit dem Abdeckpaneel **(11)** benachbarten Abschnitt in Bezug auf die durch die geometrische Achse der Bohrungslöcher im Abdeckpaneel gehende Ebene verschoben ist und neben den Gewindeverbindungen **(3)** verläuft, wobei man sie in Richtung der durch die Achse der Bohrungslöcher gehende Ebene und danach in den Abschnitt **(14)** abbiegt, der senkrecht zum Abdeckpaneel **(11)** in der geometrischen Achse der Bohrungen gelegen und mit einer Verdickung abgeschlossen ist **(15).**

4. Die Abdeckleiste gemäß dem Anspruch 3, **dadurch gekennzeichnet, dass** bei den Bohrungen für die Gewindeverbindungen **(3)** im Abdeckpaneel die Rippe auf einer Länge von etwas mehr als der Durchmesser des Gewindes der Gewindeverbinder Unterbrechungen hat, diese Unterbrechungen sind aber nur auf dem Abschnitt **(14)** der Rippe, der in der geometrischen Achse der Bohrungslöcher sowie der zu ihm benachbarten Abbiegung **(13)** gelegen ist, vorhanden.

5. Die Abdeckleiste gemäß dem Anspruch 2, **dadurch gekennzeichnet, dass** bei den Bohrungen im Abdeckpaneel für die Gewindeverbindungen die Rippe in zwei Wände aufgeteilt ist, zwischen denen ein freier Raum besteht, der dadurch zu einer Verlängerung der Bohrung im Abdeckpaneel wird.

6. Die Abdeckleiste gemäß dem Anspruch 2, **dadurch gekennzeichnet, dass** bei den Bohrungen für die Gewindeverbindungen im Abdeckpaneel die Rippe auf einer Länge von etwas mehr als der Durchmesser des Gewindes der Gewindeverbinder und auf der gesamten Höhe dieser Rippe Unterbrechungen hat.

7. Die Abdeckleiste gemäß den Ansprüchen 2, oder 3, oder 4, oder 5, oder 6, **dadurch gekennzeichnet, dass** die Brücke **(2)** ein Abschnitt geschlossenen U-Profils mit verdicktem Stegblech **(21)** ist, in dem sich eine Gewindebohrung befindet und die zueinander gebogenen Enden der Paneele **(22),** in Form von Rasthaken **(23)** geformt, bilden einen Spalt, der mit der Verdickung **(15)** der Rippe im Profil **(1)** der Abdeckleiste zusammenarbeitet.

8. Die Abdeckleiste gemäß dem Anspruch 1, **dadurch gekennzeichnet, dass** das Profil **(5)** zwei Rippen hat, die grundsätzlich senkrecht zum Abdeckpaneel **(51)** und neben den Gewindeverbindungen **(3),** mit nach außen gerichteten Rasthaken **(53),** verlaufen, die Brücke **(6)** dagegen hat Rasthaken **(63),** die mit ihrem hervorstehenden Anschlag auf sich selbst gerichtet sind, wobei der Abstand zwischen den Spitzen der Rasthaken **(63)** der Brücke **(6)** größer als der Abstand zwischen den Außenflächen beider Rippen **(52)** ist, oberhalb der Rasthaken **(53)** in ihrer direkten Nachbarschaft, aber jedoch kleiner als der Abstand zwischen den Spitzen der hervorstehenden Anschläge in den Rasthaken **(53)** beider Rippen ist.

9. Die Abdeckleiste gemäß dem Anspruch 8, **dadurch gekennzeichnet, dass** die Brücke **(6)** ein Kanalabschnitt mit verdicktem Stegblech **(61)** ist, in dem sich eine Gewindebohrung befindet, und die zueinander gebogenen Enden der Paneele **(62),** in Form von Rasthaken **(63)** geformt, bilden einen Spalt, der mit den Rasthaken **(53),** gelegen an den Enden der Rippen **(52)** im Profil **(5)** der Abdeckleiste, zusammenarbeitet.

10. Die Abdeckleiste gemäß dem Anspruch 1, **dadurch gekennzeichnet, dass** das Profil **(7)** zwei Rippen **(72)** hat, die grundsätzlich senkrecht zum Abdeckpaneel **(71)** und neben den Gewindeverbindungen **(73),** mit auf sich selbst gerichteten Rasthaken **(73),** verlaufen, wobei die Breite des Spaltes zwischen den Anschlägen der Rasthaken **(73)** geringer als die Breite der Brücke **(8)** ist.

11. Die Abdeckleiste gemäß dem Anspruch 10, **dadurch gekennzeichnet, dass** die Brücke **(8)** von der Form her dem Quader ähnlich ist, und zwar vorzugsweise mit Nuten **(81)** auf den zwei gegenüberliegenden längeren Wänden, die für die Zusammenarbeit mit den Rasthaken **(73)** der Rippen im Profil (7) der Abdeckleiste bestimmt sind.

## Revendications

1. Baguette de protection avec fixation, destinée pour recouvrir des fentes entre les segments adjacents des dispositifs **(4),** notamment des panneaux solaires, adaptée à la fixation dans ces fente et au clipsage des segments de dispositifs **(4)** entre lesquels est située la baguette de protection composée de
• profilé **(1, 5, 7)** avec une aile de protection **(11, 51, 71)** comportante des trous de passage pour les assemblages boulonnés **(3),** qui sont disposés le long du profilé **(1, 5, 7),**
• assemblages boulonnés **(3)** avec des traverse de clipsage **(2, 6, 8), caractérisé en ce que** chaque traverse **(2, 6, 8)** est raccordée au profilé **(1, 5, 7)** à l'aide d'un verrouillage maintenant cette traverse **(2, 6, 8)** en position le long du profilé **(1, 5, 7),** surtout lors de la pose de la baguette de protection dans la fente recouverte.

2. Baguette selon la revendication 1, **caractérisé en ce que** le profilé est équipé d'une nervure raccordée essentiellement perpendiculairement à l'aile de protection, terminée par un bossage, la traverse a des enclipsages avec les saillies orientées vers soi, et la largeur de la fente entre les sallies des attaches est inférieure à la largeur du bossage à l'extrémité de la nervure.

3. La baguette selon la revendication 2, **caractérisé en ce que** la nervure **(12)** du profilé **(1)** sur la section adjacente à l'aile de protection **(11)** est déplacée par rapport au plan passant par l'axe géométrique des trous dans l'aile de protection, et passe près des assemblages vissés **(3),** après quoi elle se recourbe vers le plan passant par l'axe des trous, et ensuite dans la section **(14)** perpendiculaire à l'aile de protection **(11)** positionnée dans l'axe géométrique des trous et terminée par un bossage **(15).**

4. La baguette selon la revendication 3, **caractérisé en ce que** près des trous dans l'aile de protection pour les assemblages vissés **(3),** la nervure a des ruptures sur une longueur un peu supérieure au diamètre du filetage des assemblages vissés, et ces ruptures sont seulement sur la section **(14)** de la nervure, située dans l'axe géométrique des trous et du recourbement **(13)** adjacent.

5. La baguette selon la revendication 2, **caractérisé en ce que** près des trous dans l'aile de protection pour les assemblages vissés, la nervure est divisée en deux parois, entre lesquelles se trouve un libre espace qui est un prolongement du trou dans l'aile de protection.

6. La baguette selon la revendication 2, **caractérisé en ce que** près des trous dans l'aile de protection pour les assemblages vissés, la nervure a des ruptures sur une longueur un peu supérieure au diamètre du filetage des assemblages vissés, et sur toute la hauteur de cette nervure.

7. La baguette selon la revendication 2, ou 3, ou 4, ou 5, ou 6, **caractérisé en ce que** la traverse **(2)** est une section de profilé U fermé, avec âme épaissie **(21),** dans laquelle se trouve un orifice taraudé, et les extrémités des semelles recourbées vers soi **(22)** en forme d'enclipsage **(23),** créent une fente collaborante avec le bossage **(15)** de la nervure dans le profilé **(1)** de la baguette de protection.

8. La baguette selon la revendication 1 **caractérisé en ce que** le profilé **(5)** est équipé de deux nervures essentiellement perpendiculaires à l'aile de protection **(51),** passantes près des assemblages vissés **(3),** avec des enclipsages **(53)** à saillies orientées vers l'extérieur, et la traverse **(6)** a des enclipsages **(63)** avec les sallies orientées vers soi, et la distance entre les sommets des enclipsages **(63)** de la traverse **(6)** est supérieure à la distance entre les surfaces externes des nervures **(52),** au dessus des enclipsages **(53)** dans leur voisinage direct, et inférieure à la distance entre les sommets des sallies dans les enclipsages **(53)** des deux nervures.

9. La baguette selon la revendication 8, **caractérisé en ce que** la traverse **(6)** est une section de gorge, avec âme épaissie **(61),** dans laquelle se trouve un orifice taraudé, et les extrémités des semelles recourbées vers soi **(62)** en forme d'enclipsages **(63),** créent une fente collaborante avec les enclipsages **(53)** situés sur les extrémités des nervures **(52)** dans le profilé **(5)** de la baguette de protection.

10. La baguette selon la revendication 1, **caractérisé en ce que** le profilé **(7)** possède deux nervures **(72)** essentiellement perpendiculaires à l'aile de protection **(71),** passantes près des assemblages vissés **(73),** avec les enclipsages **(73)** à saillies orientées vers soi, et la largeur de la fente entre les saillies des crochets **(73)** est inférieure à la largeur de la traverse **(8).**

11. La baguette selon la revendication 10, **caractérisé en ce que** la traverse **(8)** a la forme approximative d'un parallélépipède, avantageusement avec des rainures **(81)** sur les deux parois opposées plus longues, destinées à la coopération avec les enclipsages **(73)** des nervures dans le profilé **(7)** de la baguette de protection.
